Europäisches Patentamt

European Patent Office

Office européen des brevets

(11) Publication number: 0 382 874
A1

# EUROPEAN PATENT APPLICATION

(21) Application number: 89102768.2

(51) Int. Cl.5: G02C 5/00

(22) Date of filing: 17.02.89

(43) Date of publication of application:
22.08.90 Bulletin 90/34

(84) Designated Contracting States:
AT BE CH DE GB IT LI NL

(71) Applicant: ALPHA CUBIC INTERNATIONAL INC.
3-10, Minamiaoyama 5-chome
Minato-ku Tokyo(JP)

(72) Inventor: Chauvin, Francois
25, rue de Stade, Mamirolle
F-25660 Saone(FR)
Inventor: Vitrac, Jean-Pierre
128, Boulevard Blanqui
F-75013 Paris(FR)

(74) Representative: WILHELMS, KILIAN & PARTNER Patentanwälte
Eduard-Schmid-Strasse 2
D-8000 München 90(DE)

(54) Spectacles.

(57) Disclosed is a pair of spectacles comprising a pair of lenses connected to each other and a pair of temples connected to outer sides of the lenses. Each of the temples is connected in such a manner as to be swingable among a first position in which each of the temples extends substantially perpendicular to a lens face, a second position in which each of the temples extends in an opened state outwardly of the corresponding outer side of the lenses, and a third position in which each of the temples lies folded substantially along the rear surface of the lenses. The pair of lenses are made rotatable about a shaft which is substantially perpendicular to the lens face, allowing the spectacles to be folded into a flat state.

EP 0 382 874 A1

Fig.I C

## SPECTACLES

### BACKGROUND OF THE INVENTION:

The present invention relates to spectacles, and more particularly to spectacles having a bilateral pair of lenses and a pair of temples that are swingably connected to the left- and right-hand sides of the lenses.

Conventionally, spectacle temples are swingably connected to the left- and right-hand sides of a pair of lenses, and the swinging range of each temple is between a position in which the temple is folded to lie along the rear surface of the lenses and a normally used position in which the temple extends substantially perpendicular to a lens face. With regard to bilateral lenses, there is a type in which, from the view point of accommodation thereof, the lenses are arranged to be rotatable about a shaft which is substantially parallel or perpendicular to the lens face. (See, for example, Japanese Utility Model Laid-Open Nos. 46741/1977, 1121/1985, and 94816/1986.)

Among various shapes of spectacle temples, not only are those ones which extend substantially straight, but also ones which are curved toward the rear portion of the wearer's head or whose end portions are curved to fit around the rear of the wearer's ears. Furthermore, there are cases where a wearer wishes to wear a second pair of spectacles over a pair of spectacles already being worn. A drawback is encountered in such cases in that it is relatively troublesome to put on and remove spectacles in the case of the conventional type as the temples can only be swung between the inwardly folded position and the normally used position.

On the other hand, if a pair of lenses can be rotated about a shaft which is substantially parallel or perpendicular to the lens face, the spectacles can be advantageously folded into a relatively compact state. Nevertheless, since the overall thickness of the spectacles when folded is relatively increased, the spectacles are inevitably rather bulky in their folded state. In particular, when folded spectacles are accommodated in a pocket of the user's clothing, this bulky shape causes considerable discomfort, and the spectacles are susceptible to damage that would be caused quite easily if any external force is applied to them in the direction of their thickness.

### SUMMARY OF THE INVENTION:

Accordingly, an object of the present invention is to provide spectacles which can be worn and removed very easily even in the above-described cases.

To this end, spectacles in accordance with this aspect of the present invention are arranged such that a pair of temples respectively connected to the left- and right-hand sides of a bilateral pair of lenses are made swingable at least to an open position in which the temples extend in an opened state outwardly of the left- and the right-hand sides of the lenses by extending past a normally used position in which the temples extend substantially perpendicular to a lens face.

According to this aspect of the present invention, the spectacles can be worn or removed with the temples set in the normally used position, but can also be worn or removed with the temples swung to the open position, as necessary.

Another object of the present invention is to provide spectacles which can be folded into a flat state with a relatively slim thicknesswise dimension, thereby improving the facility with which they can be accommodated and carried.

To this end, spectacles in accordance with this aspect of the present invention incorporate the features of the above-mentioned aspect of the invention and are arranged such that the bilateral pair of lenses are connected to each other in such a manner as to be rotatable about an axis which is substantially perpendicular to the lens face.

In accordance with this aspect of the present invention, if the temples are set in the aforementioned open position and the pair of lenses are rotated about the axis which is substantially perpendicular to the lens face, the lenses and the temples can be folded in such a manner that their upper edges abut each other substantially linearly. Accordingly, the lenses as a whole can be accommodated flatly within a single plane and, therefore, in a nonbulky state.

### BRIEF DESCRIPTION OF THE DRAWINGS:

Fig. 1A is a perspective view of spectacles in accordance with an embodiment of the present invention, illustrating a state in which temples are in a normally used position;

Fig. 1B is a perspective view of the spectacles, illustrating a state in which the temples have been swung to an open position;

Fig. 1C is a perspective view of the spectacles, illustrating a state in which the pair of lenses have been rotated;

Fig. 1D is a perspective view of the spectacles, illustrating an accommodated state;

Fig. 2 is a perspective view of spectacles in accordance with another embodiment of the present invention;

Fig. 3 is an expanded top plan view, partly in section, of a central hinge portion of Fig. 1A; and

Fig. 4 is a perspective view of a connecting portion between the temple and a frame shown in Fig. 1A.

DESCRIPTION OF THE PREFERRED EMBODIMENTS:

Referring now to the accompanying drawings, a description will be given of the embodiments of the present invention.

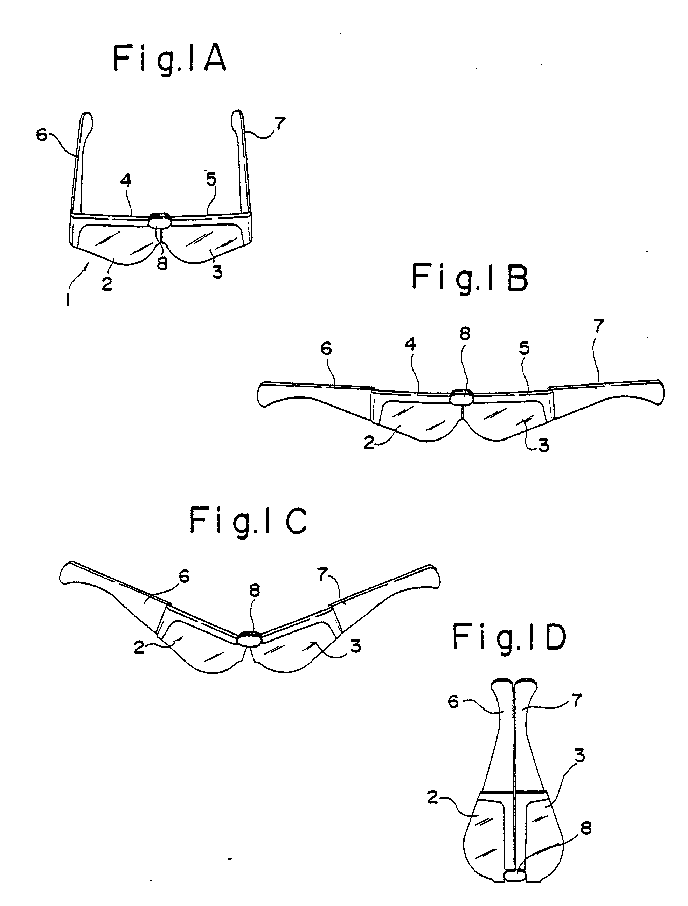

Figs. 1A to 1D show an embodiment of spectacles in accordance with the present invention, which is illustrated in the order of folding from a normally used state to an accommodated state. In Fig. 1A, a pair of spectacles 1 has a standard configuration. In other words, the spectacles 1 has a bilateral pair of lenses 2, 3, a pair of frames 4, 5 for holding them, and a bilateral pair of temples 6, 7 connected to the left- and right-hand sides of the lenses (left- and right-hand sides of the frames in this embodiment. In this embodiment, the lenses 2, 3 are formed of transparent glass or synthetic resin, and the present invention need not be confined to an arrangement in which frames are provided. In other words, it is possible to adopt an arrangement in which the temples 6, 7 are mounted directly on the side portions of the lenses 2, 3.

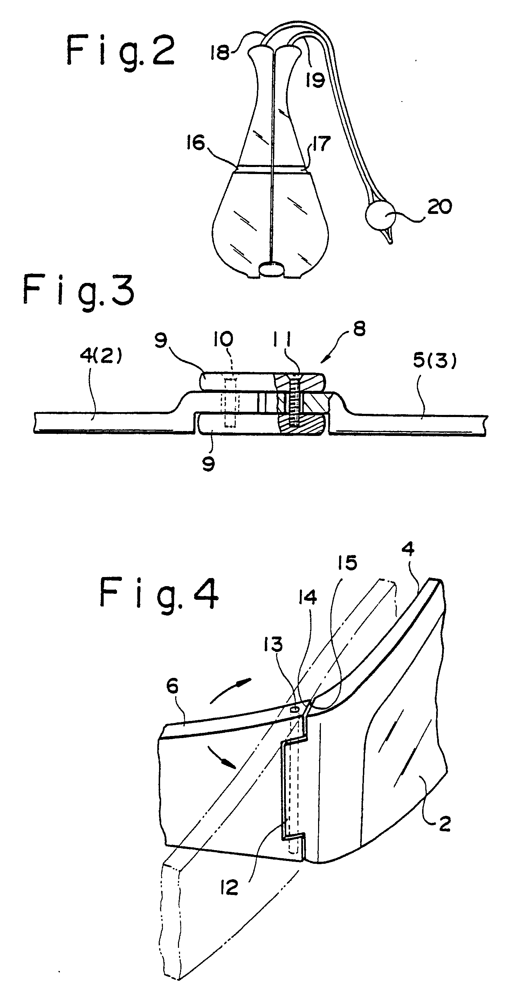

· As shown in detail in Fig. 3, the lenses 2, 3 are connected to each other by means of a central hinge portion 8. This central hinge portion 8 has a pair of holding plates 9, and adjacent end portions of the bilateral pair of frames 4, 5 are clamped between the holding plates 9 by means of a bilateral pair of screws 10, 11. The arrangement is such that the lenses 2, 3 are capable of rotating about these screws 10, 11, respectively. In short, the pair of lenses 2, 3 are connected to each other rotatably about an axis that is substantially perpendicular to the lens face. It should be noted that the structure of this central hinge portion need not be confined to the above-described. For instance, one screw alone may be used as a rotational axis. In addition, a sigle holding plate may be provided, or the holding plate may be omitted. These modifications are matters that can be readily attained by those skilled in the art.

Each of the temples is swingably connected to either the frame or the lens. Fig. 4 shows an example of a connecting structure. In this case, the connecting structure is arranged such that a connecting end of the temple 6 is provided with a central recess, and a projection 12 projecting integrally from the frame 4 is adapted to be fitted into this recess. A swinging shaft 13 which extends vertically penetrates the connecting end of the temple 6 and the projection 12 of the frame 4 so as to pivotally support the two members. Accordingly, the temple 6 at the normally used position shown in solid line in Fig. 4 is capable of swinging about the swinging shaft 13 not only to a folded position in which the temple lies behind the lens and substantially along the lens face, as indicated by the dash-dot line in Fig. 4, but also to an open position in which the temple extends outwardly of the right-hand (left-hand) side of the lens and substantially parallel to the lens face, as indicated by the two-dotted dashed line in the drawing. It is preferred that each of the temples is capable of swinging with a snap action at the aforementioned respective positions. For instance, if a front edge 14 of the connecting end of the temple and a rear edge 15 of the frame 4 are formed in such a manner as to be flat and to abut each other, it is possible to obtain a snap each time the two edges 14, 15 are made to abut each other in the normally used position, and the rear edge 15 of the frame and a side surface of the temple are made to abut each other in the open and folded positions. In order to allow these two members to rotate relative to each other from the abutted state, it suffices if the swinging shaft 13 is formed of a resilient material.

By virtue of the above-described arrangement, since the temples 6, 7 are capable of assuming the outwardly open position by extending past the normally used position, the spectacles can be put on or removed with the temples 6, 7 set in the open position, thereby remarkably facilitating the actions of putting on and removing the spectacles.

To set the spectacles in the accommodated state from the normally used state in accordance with the above-described embodiment shown in Fig. 1A, the temples 6, 7 are first swung to the open position, as shown in Fig. 1B. Then, as shown in Fig. 1C, the lenses 2, 3 are rotated upwardly about the axis of the central hinge portion 8, and the spectacles are folded in such a manner that the upper edges of the frames 4, 5 and the upper edges of the temples 6, 7 in the open state are brought into contact with each other.

Consequently, a state is obtained in which the temples extend in substantially the same plane as that of the lens faces, so that the spectacles as a whole become flat. Accordingly, as compared with the conventional bulky type, accommodation of the spectacles is appreciably facilitated, and the spectacles can be accommodated in a pocket of the user's clothing or the like. If the upper edges of the lenses and the upper edges of the temples are formed substantially flat, and the temples, when taking the open position, are so arranged to extend in substantially the same plane as that of the lens faces, as shown in Fig. 1B, it is possible to obtain an even flatter state of accommodation.

With the above-described arrangement, it is possible to provide a decoration, a trademark, or the like on the central hinge portion 8, particularly the front-side holding plate 9. In addition, it is possible to provide a clasp for holding the temples together in the state shown in Fig. 1D. Thus, improvements can be made in the design.

Furthermore, as shown in Fig. 2, each of the connecting portions between the lens and the temple may be formed of a flexible material 16, 17 which does not have a shaft. In addition, strings 18, 19 for preventing the spectacles from coming off when stretched around the wearer's head or neck may be respectively attached to the temples. Incidentally, an adjusting member 20 is used to adjust the length of these strings.

As described above, in accordance with the present invention, since the temples are made swingable at least to the open position in which the temples extend in an opened state outwardly of the left- and right-hand sides of the lenses by extending past the normally used position where they extend substantially perpendicular to the lens face, there is an advantage in that the wearing and removal of the spectacles is remarkably facilitated.

In addition, since the bilateral pair of lenses are made rotatable about an axis which is substantially perpendicular to the lens face, if the temples are set in the aforementioned open position and the lenses are rotated in such a manner that the upper edges thereof are brought into contact with each other, the spectacles as a whole can be folded into a very flat state. This offers the additional advantage of providing a remarkable improvement in the facility with which the spectacles can be accommodated.

## Claims

1. Spectacles comprising:
a pair of lenses connected to each other; and
a pair of temples connected to outer sides of said pair of lenses, respectively, in such a manner as to be swingable at least between a first position in which each of said temples extends substantially perpendicular to a lens face and a second position in which each of said temples extends in an opened state outwardly of the corresponding outer side of said pair of lenses.

2. Spectacles according to Claim 1, wherein each of said temples is connected swingably among said first position, said second position, and a third position in which each of said temples lies folded substantially along the rear surface of said pair of lenses.

3. Spectacles according to Claim 1, wherein each of said lenses has a frame around the edge thereof, said temple being connected to the outer side of said frame.

4. Spectacles according to Claim 1, wherein said pair of lenses are connected rotatably about an axis which is substantially perpendicular to the lens face.

5. Spectacles according to Claim 1, wherein an upper edge of each of said lenses and an upper edge of each of said temples are formed substantially flat.

6. Spectacles according to Claim 1, wherein each of said temples at said second position extends substantially parallel to the lens face.

7. Spectacles comprising:
a pair of lenses connected to each other about an axis which is substantially perpendicular to a lens face; and
a pair of temples connected to outer sides of said pair of lenses, respectively, in such a manner as to be swingable among a first position in which each of said temples extends substantially perpendicular to said lens face, a second position in which each of said temples extends in an opened state outwardly of the corresponding outer side of said pair of lenses and substantially parallel to the lens face, and a third position in which each of said temples lies folded substantially along the rear surface of said pair of lenses.

Fig.1A

Fig.1B

Fig.1C

Fig.1D

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | FR-A-2 619 935 (STYL CONCEPT) <br> * Whole document * | 1-7 | G 02 C 5/00 |
| X | CH-A- 668 491 (G. GENTA) <br> * Pages 2-3 * | 1,3,4,6 ,7 | |
| A | FR-A-1 011 600 (L. VIALE) <br> * Page 1 * | 1-4,7 | |
| A | FR-A- 435 626 (A. SPANEY et al.) <br> * Page 1; page 2, lines 1-81 * | 1,4,5 | |
| D,A | JP-U-5 246 741 | | |
| D,A | JP-U-60 001 121 | | |
| D,A | JP-U-6 194 816 | | |

|  |  |  | TECHNICAL FIELDS SEARCHED (Int. Cl.5) |
|---|---|---|---|
|  |  |  | G 02 C 5/00 |

The present search report has been drawn up for all claims

| Place of search | Date of completion of the search | Examiner |
|---|---|---|
| THE HAGUE | 10-10-1989 | CALLEWAERT-HAEZEBROUCK H |